# EUROPEAN PATENT APPLICATION

(11) **EP 2 712 750 A1**
(43) Date of publication of application: **02.04.2014**
(21) Application number: 13004666.7
(22) Date of filing: 25.09.2013
(51) Int. Cl.: B60K 6/46

(54) **Power tool**

(30) Priority: 26.09.2012 JP 2012212313; 26.09.2012 JP 2012212314; 26.09.2012 JP 2012212316; 17.05.2013 JP 2013105650
(71) Applicant: Makita Corporation, Anjo-shi, Aichi 446-8502 (JP)
(72) Inventor: Kawashima, Hideo, Anjo-shi Aichi, 446-8502 (JP); Hirabayashi, Shinji, Anjo-shi Aichi, 446-8502 (JP); Hayashi, Noriaki, Anjo-shi Aichi, 446-8502 (JP)
(74) Representative: Müller-Boré & Partner Patentanwälte PartG mbB

(57) **Abstract**

A brush cutter (200) as a power tool comprises an engine (111), an electric motor (141), a driving shaft (215) capable of driving a tool (207) and a battery which provides current to the electric motor (141). The brush cutter (200) is adapted to drive the tool (207) in a hybrid driving mode in which both the engine (111) and the electric motor (141) drive the tool. Further, the engine (111) is arranged between the electric motor (141) and the driving shaft (215).

## Description

### Introduction:

The invention relates to a power tool which drives a tool by an engine and performs a predetermined operation.

### Description of the Related Art:

Japanese Laid-Open Patent Application Publication No. 2011-244724 discloses a brush cutter as a hand-held power tool which drives a tool by an engine as a driving source. In case that the engine of the brush cutter does not drive because of being out of fuel, the tool is driven by switching the driving source from the engine to a motor by a changing-over switch.

### Statement of Invention:

As to a power tool which has an engine as a driving source, having regard to an efficiency of performance of the power tool, a high-power engine is required. However, if the high-power engine is utilized to the power tool, weight of the power tool is increased. However, in a hand-held power tool, because a user uses the hand-held power tool while holding and carrying it, a weight optimization of the hand-held power tool is desired for usability.

An object of the invention is, in consideration of the above described problem, to improve usability of a power tool for a user.

Above-mentioned object is achieved by an invention of claim 1. According to a preferable aspect of the invention, a power tool comprises an engine, a motor, a driving shaft capable of driving a tool, and a battery which provides electric current to the motor. The power tool is adapted to drive the tool in a hybrid driving mode in which both the engine and the motor drive the tool. Further, the engine is arranged between the motor and the driving shaft. The engine preferably includes two cycle engine and four cycle engine. Further, the power tool preferably includes a brush cutter, a petrol string trimmer, a chain saw, a power cutter, a sprayer and a vacuum cleaner, in which a user operates while holding and carrying such portable power tool. Further, the motor is also called an electric motor. Accordingly, the motor is electrically driven.

According to this aspect, the driving shaft is driven in the hybrid driving mode in which both the engine and the motor drive the driving shaft. In other words, the engine and the motor are capable of driving the driving shaft at the same time. Therefore, large output of the power tool is obtained by the engine and the motor. Further, the engine which is heavier than the motor is arranged between the motor and the driving shaft. Therefore, the power tool is balanced easily. As a result, usability for operating the power tool by a user is improved.

According to a further preferable aspect, the motor biases a piston of the engine when the piston moves toward a top dead point from a bottom dead point during one engine cycle. The one engine cycle means a set of continuous strokes of an intake stroke, a compression stroke, a combustion stroke and an exhaust stroke. According to this aspect, when the piston moves toward the top dead point from the bottom dead point, the motor drives the piston, and thereby a driving of the engine is assisted.

According to a further preferable aspect, the motor functions as a generator when the piston moves toward the bottom dead point from the top dead point during one engine cycle. According to this aspect, when the piston moves toward the bottom dead point from the top dead point, the motor functions as a generator. Therefore, electricity is generated by the driving of the engine. As a result, electricity for driving the motor is obtained.

According to a further preferable aspect, the motor functions as a generator. Further, the battery is charged by electricity generated by the motor driven as the generator.

According to a further preferable aspect, the motor functions as a starter motor when starting the engine.

According to this aspect, since the motor functions as a starter motor, the motor not only drives the driving shaft but starts the motor. That is, the motor is also utilized for starting the engine.

According to a further preferable aspect, the power tool comprises a recoil starter which is connected to the motor. Further, the recoil starter starts the engine via the motor. The recoil starter is also called a manual starter or a pull starter.

According to this aspect, the engine is started by a manual operation of a user without using a starter motor. In addition to this aspect, the motor may also be provided as a starter motor. In other words, the engine may be started by not only a starter motor but also a manual operation of a user.

According to a further preferable aspect, the motor is connected to an output shaft of the engine. According to this aspect, since the motor is connected to the output shaft of the engine, a construction in which the motor drives the piston of the engine and another construction in which the motor is driven as a generator by the engine are rationally provided. Further, it may be preferable that a rotation shaft of the motor and the output shaft of the engine are arranged coaxially to each other.

According to a further preferable aspect, the motor is provided with a rotor and a stator as an outer rotor motor in which the rotor is rotatably arranged outside the stator, and the rotor of the motor is connected to the output shaft of the engine. By utilizing an outer rotor motor, a pole number of the magnet is increased and distance (radius) from a center of rotation to an outer surface of the rotor gets longer. Thus, relatively large torque as an output torque of the motor is generated.

According to other preferable aspect, a power tool comprised an engine capable of driveing a tool, a motor, a body portion which houses the engine, a battery which provides current to the motor, and a connecting portion which connects the body portion and the battery. Further, the connecting portion has a holding region which is held by a user. The motor preferably includes a driving motor which drives the tool independently, a driving motor which drives the tool in conjunction with the engine, and a starter motor which starts the engine.

According to this aspect, since the body portion and the battery are connected by the connecting portion, the battery is distantly arranged from the engine which is housed in the body portion. Therefore, transmission of heat generated by the engine to the battery is prevented. Accordingly, the battery is protected from heat of the engine. Further, the holding region which is held by a user is provided on the connecting portion. Thus, the connecting portion is served as a handle for holding the power tool.

According to a further preferable aspect, the connecting portion includes a first portion which connects the body portion and the battery, and a second portion which is other than the first portion. The second portion also connects the body portion and the battery. Further the holding region is provided on at least one of the first portion and the second portion.

According to a further preferable aspect, the battery is connected to a distal end region of the connecting portion. The distal end region is provided as the most distant region from the body portion. According to this aspect, since the battery is arranged at the distal end portion which is the most distant from the body portion, a heat transmission from the engine to the battery is prevented.

According to a further preferable aspect, the connecting portion includes a battery attached portion to which the battery is attached. Further, the battery is detachably attached to the battery attached portion. According to this aspect, in a state that a remaining capacity of the battery is decreased, the battery is detached from the battery attached portion and other battery may be attached to the battery. Therefore, the power tool is able to perform an operation for a long period of time. In this aspect, the battery may be preferably attached to the battery attached portion by a sliding motion of the battery against the battery attached portion. A sliding direction of the battery may be, for example, defined as a horizontal or vertical direction which is parallel to an extending direction of the connecting portion.

According to a further preferable aspect, the power tool comprises a controller which controls the motor. Further, the controller is arranged at the connecting portion. According to this aspect, the controller is also protected from heat of the engine. In this aspect, it may be preferable that the holding portion is arranged on one of the first portion and the second portion, and the controller is arranged at the other portion.

According to a further preferable aspect, the motor drives the tool in conjunction with the engine. According to this aspect, the power tool is driven by a relatively large output of both the engine and the motor. That is, a large output of the power tool is obtained without utilizing a large displacement engine.

According to other preferable aspect, a power tool comprises an engine, a motor, a driving shaft capable of driving a tool, a body portion which houses the engine, and a battery which provides current to the motor. The engine drives the driving shaft. Further, the body portion has an exhaust opening through which exhaust air of the engine is exhausted. Further, the battery is arranged at the body portion other than on a normal line of a plane defined by an opening edge of the exhaust opening. The normal line extends from the plane outward opposite to the engine. The motor preferably includes a driving motor which drives the tool independently, a driving motor which drives the tool in conjunction with the engine, and a starter motor which starts the engine. According to this aspect, as to the battery which is arranged at the body portion, the battery arranged at a region other than on the normal line of the plane defined by the opening edge of the exhaust opening. Therefore, exhaust air is prevented from hitting directly the battery. As a result, the battery is protected from exhaust heat of the engine.

According to a further preferable aspect, an exhausting direction in which the exhaust air is exhausted is opposite to a direction in which the driving shaft protrudes from the body portion. Further, the battery is arranged at the body portion so that the battery is closer to the driving shaft than the exhaust opening. In this aspect, it is preferable that the battery is arranged at a region which overlaps with the driving shaft when seen in a direction in which the piston slides within the cylinder of the engine. According to this aspect, the battery is arranged at a driving shaft side where is opposite to the exhausting direction with respect to the exhaust opening. Therefore, exhaust air is prevented from hitting directly the battery. Further, a heat transmission from the engine to the battery is prevented. Accordingly, the battery is effectively protected.

According to a further preferable aspect, the battery is detachably attached to the body portion. According to this aspect, in a state that a remaining capacity of the battery is decreased, the battery is detached from the battery attached portion and other battery may be attached to the battery attached portion. Therefore, the power tool is able to perform an operation for a long period of time. In this aspect, the battery may be preferably attached to the battery attached portion by a sliding motion of the battery against the battery attached portion. A sliding direction of the battery may be defined along a sliding direction of the piston or a protruding direction of the driving shaft from the body portion.

According to a further preferable aspect, the power tool comprises a controller which controls the motor. Further, the controller is arranged at the battery side of the body portion. The battery side is across the engine from the exhaust opening. According to this aspect, similar to the battery, exhaust air is prevented from hitting directly the controller. Accordingly, the controller is also protected from an exhaust heat of the engine.

According to a further preferable aspect, the power tool comprised a battery cover which covers the battery. The battery cover may be detachably attached to the body portion or the battery cover may be rotatably supported by the body portion and be opened/closed by rotating. According to this aspect, the battery is protected from external force by the battery cover.

According to the invention, usability of a power tool can be improved.
Other objects, features and advantages of the invention will be readily understood after reading the following detailed description together with the accompanying drawings and the claims.

### Description of the Drawings:

Fig. 1 show a perspective view of a brush cutter according to a first embodiment.
Fig. 2 shows a cross-sectional view of a driving mechanism of the brush cutter.
Fig. 3 shows a side view of a chain saw according to a second embodiment.
Fig. 4 shows cross-sectional view of a driving mechanism of the chain saw.
Fig. 5 shows a side view of the chain saw to which a battery adapter is attached.
Fig. 6 shows another battery adapter.
Fig. 7 shows a side view of a brush cutter according to a third embodiment.
Fig. 8 shows a side view of a chain saw according to a fourth embodiment.
Fig. 9 shows a cross-sectional view of a driving mechanism of the chain saw shown in Fig. 8.
Fig. 10 shows a side view of a brush cutter according to a fifth embodiment.
Fig. 11 shows a cross-sectional view of a driving mechanism of the brush cutter.

### Description of Specific Embodiments:

Each of the additional features and method steps disclosed above and below may be utilized separately or in conjunction with other features and method steps to provide and manufacture improved power tools and method for using such the power tools and devices utilized therein. Representative examples of the invention, which examples utilized many of these additional features and method steps in conjunction, will now be described in detail with reference to the drawings. This detailed description is merely intended to teach a person skilled in the art further details for practicing preferred aspects of the present teachings and is not intended to limit the scope of the invention. Only the claims define the scope of the claimed invention. Therefore, combinations of features and steps disclosed within the following detailed description may not be necessary to practice the invention in the broadest sense, and are instead taught merely to particularly describe some representative examples of the invention, which detailed description will now be given with reference to the accompanying drawings.

### (First Embodiment)

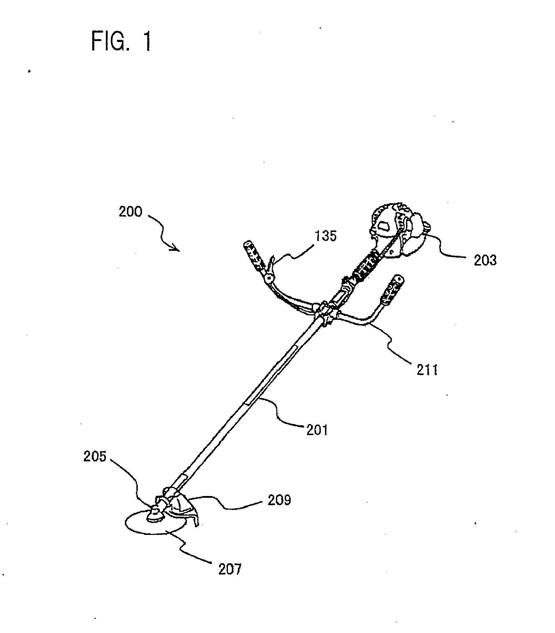

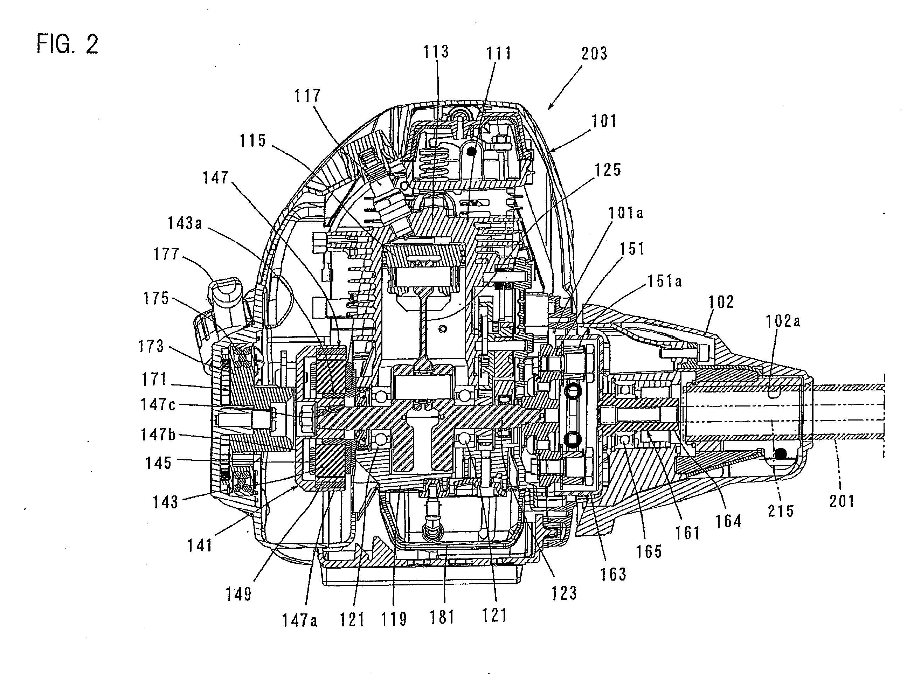

A first embodiment is explained with reference to Fig. 1 and Fig. 2. The first embodiment is one example to be applied to a brush cutter 200 as a power tool. As shown in Fig. 1, the brush cutter 200 is mainly provided with a control rod 201, a driving unit 203, a gear head 205, a blade 207, a safety cover 209 and a handle 211. The driving unit 203 is attached at one side of the control rod 201. The gear head 205 is attached at the other side of the control rod 201. The blade 207 is detachably attached to the gear head 205. The safety cover 209 is attached to the control rod 201 so as to cover the blade 207. Further, the handle 211 is arranged at an intermediate part of the control rod 201 so as to extend in a direction crossing a longitudinal direction of the control rod 201. The brush cutter 200 is held and carried by a user by utilizing a shoulder strap (not shown) which is detachably attached to the control rod 201. Further, the brush cutter 200 as a power tool is adapted to perform a cutting operation to cut a grass or vegetation and so on, in a state that a user holds the brush cutter 200 driving the blade 207. The blade 207 is one example of a feature corresponding to "a tool" of the invention.

For the convenience of the explanation, the blade 207 side of the brush cutter 200 is defined as "front side", and the driving unit 203 side of the brush cutter 200 is defined as "rear side". Further, a tip side of the U-shaped handle 211 from the control rod 201 is defined as "upper side", and the opposite side of the handle 211 which is proximal to the control rod 201 is defined as "lower side".

The control rod 201 is a pipe-shaped elongate member and extends linearly. As shown in Fig. 2, a driving shaft 215 is arranged within the control rod 201. Torque of the driving unit 203 is transmitted to the gear head 205 via the driving shaft 215, and thereby the blade 207 is rotated. The driving shaft 215 is one example of a feature corresponding to "a driving shaft" of the invention.

As shown in Fig. 1, a throttle lever 135 which controls the engine 111, and a stop switch (not shown) which stops the engine 111 are provided on the handle 211. The throttle lever 135 is an operated member which is operated by a user for adjusting power output of the engine 111.

The gear head 205 includes a blade attached shaft, a driving gear and a driven gear. The blade attached shaft crosses the driving shaft 215 and extends obliquely downward. The driving gear and the driven gear are adapted to transmit rotation of the driving shaft 215 to the blade attached shaft. The blade 207 is detachably attached to the blade attached shaft.

As shown in Fig. 2, the driving unit 203 is provided as a drive mechanism to drive the blade 207. The driving unit 203 is mainly provided with a main housing 101, the engine 111, a fuel tank 181, a recoil starter 171, an electric motor 141, and not-shown members of an air filter, a carburetor, and a muffler.

The driving unit 203 is provided as a hybrid drive mechanism which includes two different driving sources of the engine 111 and the electric motor 141. The engine 111 and the electric motor 141 are housed in the main housing 101. An opening 101a is formed at a front region of the main housing 101. A housing cover 102 which corresponds to the opening 101a is attached to the main housing 101. The housing cover 102 has an opening 102a to which the control rod 201 is detachably attached. Therefore, the control rod 201 is detachably connected to the main housing 101.

The engine 111 is formed as a reciprocating engine, and mainly provided with a cylinder 113, a piston 115, a spark plug 117, a crank case 119, a crank shaft 123 and a connecting rod 125. The engine 111 is arranged at substantially center region in the main housing 101 in a longitudinal direction (a lateral direction of Fig. 2) of the control rod 201. The engine 111 is one example of a feature corresponding to "an engine" of the invention.

The crank shaft 123 is arranged coaxially with the driving shaft 215. The crank shaft 123 is supported by a bearing 121 so that one side of the crank shaft 123 extends toward the control rod 201. An intermediate shaft 161 is arranged between the crank shaft 123 and the driving shaft 215. The intermediate shaft 161 is arranged coaxially with the crank shaft 123, and rotatably supported by a bearing 165 in the housing cover 102. The intermediate shaft 161 includes a cylindrical shaft 164 into which the driving shaft 215 is detachably attached. The shaft 164 and the driving shaft 215 are connected by a spline connection.

A centrifugal clutch 151 is arranged between the crank shaft 123 and the intermediate shaft 161. The centrifugal clutch 151 is arranged on one end side of the crank shaft 123. The centrifugal clutch 151 has a clutch shoe 151a and a cup-shaped clutch drum 163. The clutch drum 163 is fixed on one end side of the intermediate shaft 161. The clutch shoe 151a moves outwardly due to a centrifugal force, when the centrifugal clutch 151 rotates with the crank shaft 123. Accordingly, the clutch shoe 151a contacts with an inner surface of the clutch drum 163, and thereby rotation of the crank shaft 123 is transmitted to the intermediate shaft 161. That is, in case that a speed of rotation of the crank shaft 123 is not faster than a predetermined speed, the centrifugal clutch 151 doesn' t transmit rotation of the crank shaft 123 to the intermediate shaft 161. On the other hand, in case that the speed of rotation of the crank shaft 123 is faster than the predetermined speed, the centrifugal clutch 151 transmits rotation of the crank shaft 123 to the intermediate shaft 161. Rotation of the intermediate shaft 161 is transmitted to the gear head 205 via the driving shaft 215, and thereby the blade 207 is driven. Further, an electromagnetic clutch may be utilized instead of the centrifugal clutch 151.

The electric motor 141 is arranged at a rear region opposite to the driving shaft 215 with respect to the engine 111. That is, the electric motor 141, the engine 111 and the driving shaft 215 are arranged in sequence in a longitudinal direction of the driving shaft 215. In other words, the engine 111 is arranged between the electric motor 141 and the driving shaft 215 in the longitudinal direction of the driving shaft 215. The electric motor 141 is formed as an outer rotor motor and mainly provided with a stator core 143, a stator coil 145, an outer rotor 147 and a magnet 149. The electric motor 141 is arranged coaxially with the crank shaft 123. Electric current (electricity) is provided to the electric motor 141 from a battery pack which is detachably attached to a battery attached portion, and thereby the electric motor 141 is electrically driven. The electric motor 141 is one example of a feature corresponding to "a motor" of the invention.

The stator core 143 is a disk-shaped member made of a magnetic material. The stator core 143 is fixed on outer surfaces of the cylinder 113 and the crank case 119 via the sleeve 143a. The sleeve 143a is penetrated by the crank shaft 123. The stator coil 145 is wound on the stator core 143, and when electric current is applied, the stator core 143 is excited. The stator core 143 is one example of a feature corresponding to "a stator" of the invention.

The outer rotor 147 is a cup-shaped member which has a cylindrical side wall 147a and bottom wall 147b. The side wall 147a is arranged outside the stator core 143 so as to surround the stator core 143. The magnet 149 is arranged on an inner surface of the side wall 147a so as to face an outer surface of the stator core 143. The bottom wall 147b of the outer rotor 147 has a cylindrical part 147c on its center region. The cylindrical part 147c is connected with the other end side of the crank shaft 123 by a key coupling. That is, the outer rotor 147 of the electric motor 141 is connected to the crank shaft 123. The outer rotor 147 is one example of a feature corresponding to "a rotor" of the invention.

A recoil starter 171 for starting the engine 111 is arranged rearward of the electric motor 141, where is opposite to the engine 111. The recoil starter 171 is arranged coaxially with the outer rotor 147 of the electric motor 141. The recoil starter 171 has a pulley 173 which is rotatably attached on the main housing 101, a rope 175 which is wound on an outer surface of the pulley 173 and a lever 177 which is connected to the rope 175. When a user pulls the lever 177, the pulley 173 is rotated by the rope 175. Accordingly, rotation of the pulley 175 is transmitted to the crank shaft 123 via the outer rotor 147 of the electric motor 141. Further, the recoil starter 171 is adapted to transmit rotation of the pulley 173 to the outer rotor 147 to start the engine 111, and not to transmit opposite rotation of the pulley 173.

A driving mode switching switch (not shown) as an operated member for switching a driving mode is arranged on the handle 211, which is manually operable by a user. The driving mode switching switch switches the driving mode between a first driving mode in which the engine 111 and the electric motor 141 are driven at the same time and a second driving mode in which only the engine 111 is driven. The first driving mode in which the engine 111 and the electric motor 141 are driven at the same time is one example of a feature corresponding to "a hybrid driving mode" of the invention.

The throttle lever 135 arranged on the handle 211 is an operated member which adjusts an amount of inlet air (air or mixture gas of fuel and air) flowed into the engine 111 and adjusts a rotation speed (number of rotations) of the engine 111. Further, the throttle lever 135 is adapted to adjust a rotation speed (number of rotations) of the electric motor 141.

A controller (not shown) which controls a driving of the engine 111, for example, controls a timing of firing of the engine 111, is provided in the driving unit 203. When the first driving mode is selected, the controller controls the amount of inlet air flowed into the engine 111 and a timing of firing based on an operated movement of the throttle lever 135, and thereby the controller controls the rotation speed of the engine 111. Further, the controller controls an electric current provision to the electric motor 141, and thereby the controller controls the rotation speed of the electric motor 141. On the other hand, when the second driving mode is selected, the controller controls the amount of inlet air to the engine 111 based on an operated movement of the throttle lever 135, and thereby the controller controls the rotation speed of the engine 111.

In the brush cutter 200 described above, when the first driving mode is selected via the driving mode switching switch and the engine 111 is started, the controller drives and controls both the engine 111 and the electric motor 141 based on an operation of the throttle lever 135. Accordingly, the electric motor 141 assists a driving of the engine 111. When a rotation speed of the crank shaft 123 exceeds a predetermined threshold, rotation of the crank shaft 123 is transmitted to the intermediate shaft 161 via the centrifugal clutch 151. As a result, rotation of the crank shaft 123 is transmitted to the blade 207 via the driving shaft 215 and the gear head 205. That is, in a state that the engine 111 and the electric motor 141 are driven at the same time in the first driving mode, the driving shaft 215 is driven by both power output of the engine 111 and the electric motor 141, and thereby the blade 207 is driven.

On the other hand, when the second driving mode is selected and the engine 111 is started, the controller controls the electric motor 141 so as not to be driven. That is, in the second driving mode, only the engine 111 is driven, and the electric motor 141 is not driven even if the throttle lever 135 is operated. Accordingly, a rotation speed of the crank shaft 123 exceeds the predetermined threshold, rotation of the crank shaft 123 is transmitted to the driving shaft 215 via the centrifugal clutch 151, and thereby the blade 207 is driven.

As described above, according to the first embodiment, because the driving shaft 215 is drivable by both the engine 111 and the electric motor 141 in the first driving mode, the brush cutter 200 is driven by a relatively large power output.

Further, according to the first embodiment, the blade 207 is driven by one of the driving modes selected among the first and the second driving mode. Therefore, based on an operating aspect, a user is able to switch and select the driving modes in which the brush cutter 200 outputs different powers to each other, and thereby the operation is effectively accomplished.

Further, according to the first embodiment, because the engine 111 is arranged between the electric motor 141 and the driving shaft 215, weight of the brush cutter 200 with respect to a front-rear direction of the brush cutter 200 is balanced. That is, because the engine 111 which is relatively heavier component compared with the electric motor 141 and a blade attached shaft is arranged at an intermediate region of the brush cutter 200, a gravity point of the brush cutter 200 is defined close to a center region of the control rod 201 with respect to a longitudinal direction of the control rod 201. As a result, a usability of the brush cutter 200 is improved.

Further, according to the first embodiment, because the electric motor 141 is arranged at a rear end region of the main housing 101, outer air is flowed into the main housing 101 easily, and thereby the brush cutter 200 is cooled down effectively. In addition, because the recoil starter 171 is arranged further rearward than the electric motor 141, a usability of the lever 177 when a user starts the engine 111 is improved.

In the first embodiment, rotation of the engine 111 is transmitted to the electric motor 141 and thereby the electric motor 141 is also driven as a generator. Therefore, the battery pack is charged by electricity generated by the electric motor 141. As a result, energy is rationally used. The battery pack is one example of a feature corresponding to "a battery" of the invention.

Further, the controller controls the motors 141 based on a position of the crank shaft 123 during cyclic stroke of an inlet stroke, a compression stroke, a combustion stroke and an exhaust stroke of the engine 111. That is, during a stroke in which the piston 115 moves from a bottom dead point to a top dead point, the controller controls the electric motor 141 so as to bias the piston 115, thereby the electric motor 141 assists the drive of the engine 111. On the other hand, during a stroke in which the piston 115 moves from the top dead point to the bottom dead point, the controller controls the electric motor 141 to be driven as a generator, thereby a part of combustion energy is utilized to generate electricity.

Further, according to the first embodiment, the electric motor 141 behaves as a starter motor which starts the engine 111. When a user operates a start switch (not shown), the electric motor 141 rotates the crank shaft 123 which is connected to the outer rotor 147 of the electric motor 141. Further, the controller controls the spark plug 117 and lights off the engine 111 when the piston 115 compresses mixture gas inside the cylinder 113, thereby the engine 111 is started.

Further, according to the first embodiment, because the centrifugal clutch 151 is arranged between the crank shaft 123 and the intermediate shaft 161, during a lower rotation speed right after the engine 111 is started, the blade 207 is not driven. Accordingly, in case that the throttle lever 135 is operated by a user in order to perform a predetermined operation, the driving shaft 215 is actuated in a faster rotation speed, and thereby the blade 207 is driven.

Further, according to the first embodiment, because the electric motor 141 is provided as an outer rotor motor, a pole number of the magnet 149 is increased and distance (radius) from a center of rotation to an outer surface of the outer rotor 147 becomes longer. Therefore, relatively large torque is generated. Further, because the outer rotor motor is utilized as the electric motor 141, the electric motor 141 is provided on an outer surface side of the crank shaft 123. Accordingly, the engine 111 and the electric motor 141 are rationally arranged.

### (Second embodiment)

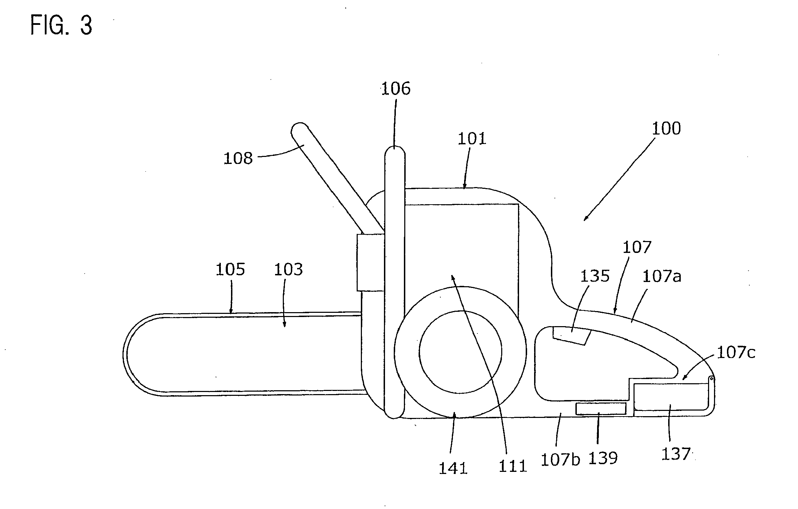

A second embodiment is explained with reference to Fig. 3 to Fig. 6. The second embodiment is one example applied to a chain saw 100 as a power tool. Similar constructions to the first embodiment are numbered by the same reference numerals and detailed explanation is omitted.

As shown in Fig. 3, the chain saw 100 is mainly provided with a main housing 101, a guide bar 103, a front handle 106 and a rear handle 107. The guide bar 103 is protruded from one side of the main housing 101, and a saw chain 105 as a tool is attached on a periphery of the guide bar 103. Accordingly, attached saw chain 105 is driven and rotated thereby a cutting operation against a workpiece is performed. The front handle 106 is connected on a front side of the main housing 101 and the rear handle 107 is connected on a rear side of the main housing 101.

For the convenience of the explanation, with respect to a direction in which the guide bar 103 extends, a distal end side of the guide bar 103 is defined as "front side", and the rear handle 107 side is defined as "rear side" of the chain saw 100. A hand guard 108 is connected on the main housing 101 at the front of the front handle 106. Accordingly, a user holds the front handle 106 and the rear handle 107 respectively and operates the chain saw 100, and thereby a cutting operation is performed.

As shown in Fig. 3, the rear handle 107 is provided with a upper side portion 107a and a lower side portion 107b, and the rear handle 107 is formed as a loop-shaped member in a side view. The upper side portion 107a is served as a holding potion which is held by a user. A throttle lever 135 and a stop switch (not shown) both of which are manually operable by a user are arranged on the upper side portion 107a. The stop switch is adapted to stop a drive of the engine 111. Further, a battery attached portion 107c to which a battery pack 137 is attached and a controller 139 are arranged on the lower side portion 107b. The controller is adapted to control the electric motor 141 and the engine 111 based on an operation of the throttle lever 135.

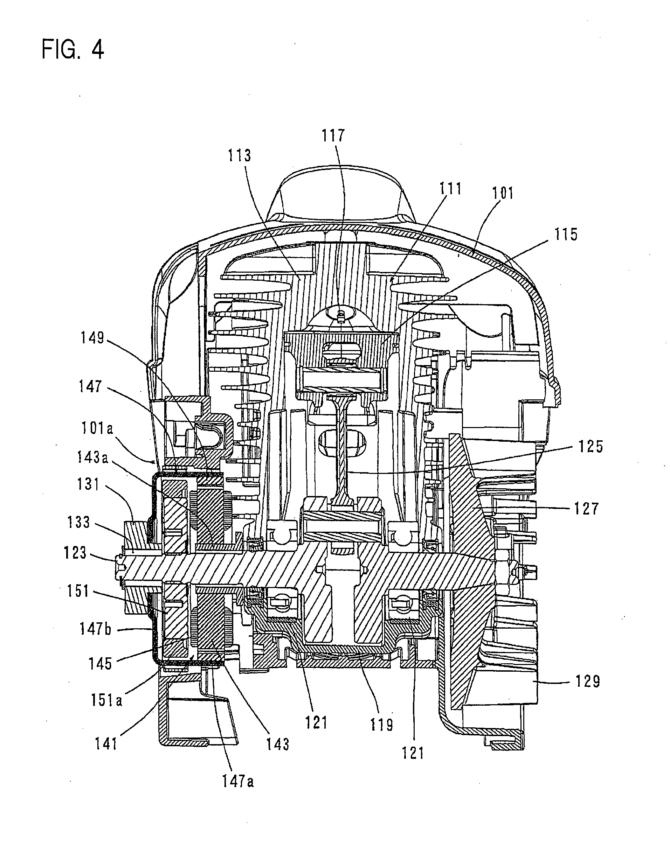

As shown in Fig. 4, the electric motor 141 is arranged between the engine 111 and a driving shaft 131 which actuates the saw chain 105. The chain saw 100 is adapted to drive in one of three driving modes among a first, a second and a third driving mode. The first driving mode is adapted to drive the driving shaft 131 by both the engine 111 and the electric motor 141. The second driving mode is adapted to drive the driving shaft 131 by only the engine 111. The third driving mode is adapted to drive the driving shaft 131 by only the electric motor 141. That is, a driving mode switching switch is adapted to switch the driving mode among the three driving modes. Further, the driving shaft 131 is attached on an one end side of the crank shaft 123 via a needle bearing 133 in a relatively rotatable manner against the crank shaft 123 at one end side part of the crank shaft 123 of the engine 111. The driving shaft 131 is served for driving of the saw chain 105. The first driving mode is one example of a feature corresponding to "a hybrid driving mode" of the invention.

The electric motor 141 is provided as an outer rotor motor, and arranged coaxially with the crank shaft 123 of the engine 111. An outer rotor 147 is fixed and connected to the driving shaft 131. That is, rotation of the electric motor 141 is directly transmitted to the driving shaft 131.

A centrifugal clutch 151 is arranged between the outer rotor 147 of the electric motor 141 and the crank shaft 123 of the engine 111. The centrifugal clutch 151 is connected to the crank shaft 123. A clutch shoe 151a of the centrifugal clutch 151 is moved outwardly when the centrifugal clutch 151 is rotated by the crank shaft 123. Accordingly, the clutch shoe 151a contacts with an inner surface of the side wall 147a of the outer rotor 147, and thereby rotation of the crank shaft 123 is transmitted to the outer rotor 147. That is, in case that a speed of rotation of the crank shaft 123 is not faster than a predetermined speed, the centrifugal clutch 151 doesn't transmit rotation of the crank shaft 123 to the outer rotor 147. On the other hand, in case that the speed of rotation of the crank shaft 123 is faster than the predetermined speed, the centrifugal clutch 151 transmits rotation of the crank shaft 123 to the outer rotor 147. Further, an electromagnetic clutch may be utilized instead of the centrifugal clutch 151.

A fly wheel 127 which has a cooling fan 129 is arranged on the other end side of the crank shaft 123. Further, a recoil starter (not shown) for stating the engine 111, which is manually operable by a user, is arranged adjacently to the fly wheel 127.

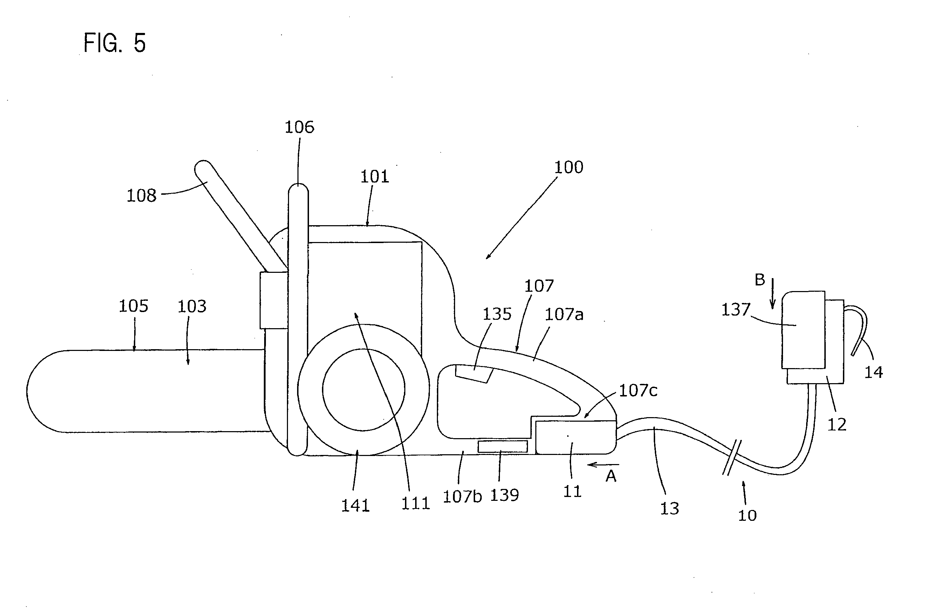

As shown in Fig. 5, a battery pack 137 is adapted to be attached not only directly to the battery attached portion 107c, but also indirectly to the battery attached portion 107c. That is, the battery pack 137 is indirectly attached to the battery attached portion 107c via a battery adapter 10. The battery adapter 10 is detachably attached to the battery attached portion 107c. The battery adapter 10 is mainly provided with a body side adapter 11, a battery holding portion 12 and a cable 13.

The body side adapter 11 is detachably attached to the battery attached portion 107c. The body side adapter 11 is formed as substantially same shape with the battery pack 137. The battery holding portion 12 is formed so that the battery pack 137 is detachably attached to the battery holding portion 12. The body side portion 11 and the battery holding portion 12 are connected by the cable 13, and thereby electric current is provided to the body side adapter 11 from the battery pack 137 which is attached to the battery holding portion 12. Accordingly, electric current is provided from the body side adapter 11 to the chain saw 100.

The body side adapter 11 is adapted to slide against the battery attached portion 107c in a direction indicated by an arrow A and thereby the body side adapter 11 is attached to the battery attached portion 107c. In this case, the cable 13 is connected at a rear region of the body side adapter 11 in a sliding direction (A-direction) and the cable 13 is extended toward an opposite direction of the sliding direction. Further, similar to the body side adapter 10, the battery pack 137 is also adapted to slide in the sliding direction and thereby the battery pack 137 is attached to the battery attached portion 107c.

Further, the battery pack 137 is attached to the battery holding portion 12 by a sliding motion of the battery pack 137 against the battery holding portion 12. A sliding direction of the sliding motion is indicated by an arrow B. Further, the battery holding portion 12 has a hook 14. Therefore, a user is able to hold the battery holding portion 12 by means of the hook 14 hooked on user's belt and so on. Accordingly, during an operation, dropping off of the battery pack 137 from the battery holding portion 12 is prevented by a relation of a hooking direction of the hook 14 of the battery holding portion 12 and the sliding direction of the battery pack 137 against the battery holding portion 12.

The battery holding portion 12 may be formed so that a plurality of the battery packs 137 are attachable to the battery holding portion 12. In case that a plurality of the battery packs 137 are attached to the battery holding portion 12, a plurality of the battery packs 137 are electrically connected in series to each other. Accordingly, the chain saw 100 is driven by high voltage. On the other hand, a plurality of the battery packs 137 may be electrically connected in parallel. In such case, a drivable duration of the chain saw 100 is increased. Further, a connection of a plurality of the battery packs 137 may be switchable between the series connection and the parallel connection. In this case, it may be preferable that a switch which is manually switchable by a user is provided on the battery holding portion 12.

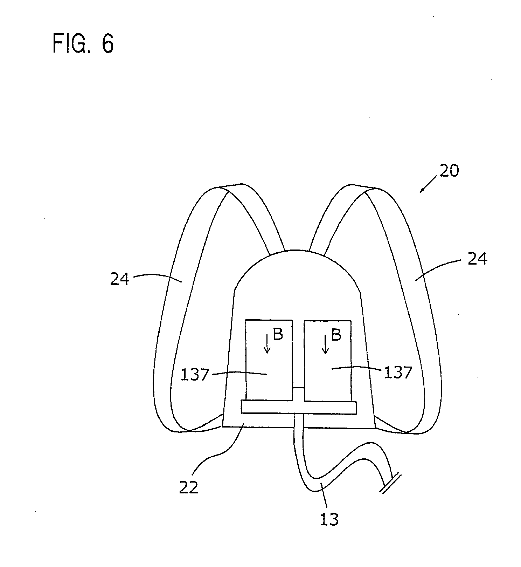

Further, a battery holding portion 22 of a battery adapter 20 may be formed as shown in Fig. 6. Two battery packs 137 are attachable to the battery holding portion 22. The battery pack 137 is adapted to slide in a direction indicated by an arrow B and thereby the battery pack 137 is attached to the battery holding portion 22. The battery holding portion 22 has two shoulder straps 24. Therefore, a user holds the battery holding portion by lifting it onto the user' s back. Further, the battery holding portion 22 may be formed so that more than three battery packs 137 are attached to the battery holding portion 22. In such case, the chain saw 100 may be driven by only one battery pack 137 which is attached to the battery holding portion 22.

Further, a plurality of the battery packs 137 attached to the battery holding portion 22 are electrically connected in series. Accordingly, the chain saw 100 is driven by high voltage. On the other hand, a plurality of the battery packs 137 may be electrically connected in parallel. In such case, a drivable duration of the chain saw 100 is increased. Further, a connection of a plurality of the battery packs 137 may be switchable between the series connection and the parallel connection. In this case, it may be preferable that a switch which is manually switchable by a user is provided on the battery holding portion 22.

In the chain saw 100 described above, when the first driving mode is selected via the driving mode switching switch and the engine 111 is started, the controller 139 drives and controls the engine 111 and the electric motor 141 at the same time based on an operation of the throttle lever 135. Accordingly, the outer rotor 147 of the electric motor 141 is rotated, and when a rotation speed of the crank shaft 123 exceeds a predetermined threshold, rotation of the crank shaft 123 is transmitted to the outer rotor 147 via the centrifugal clutch 151. As a result, the driving shaft 131 is driven by both power output of the engine 111 and the electric motor 141, and thereby the saw chain 105 is driven.

On the other hand, when the second driving mode is selected, the controller 139 controls and drives only the engine 111. Accordingly, when a rotation speed of the crank shaft 123 exceeds the predetermined threshold, rotation of the crank shaft 123 is transmitted to the outer rotor 147 via the centrifugal clutch 151. As a result, the outer rotor 147 is rotated integrally with the crank shaft 123 and then driving shaft 131 is driven, and thereby the saw chain 105 is driven.

Further, when the third driving mode is selected, the controller 139 controls and drives only the electric motor 141. Accordingly, a rotation speed of the electric motor 141 is controlled based on an operation of the throttle lever 135, thereby rotation of the electric motor 141 is transmitted from the outer rotor 135 to the driving shaft 131. As a result, the driving shaft 131 is driven by the electric motor 141, and thereby the saw chain 105 is driven. In this case, because the centrifugal clutch 151 is not actuated, rotation of the outer rotor 147 is not prevented by the centrifugal clutch 151.

According to the second embodiment described above, the driving shaft 131, namely the saw chain 105, is driven by one of the driving modes selected among three driving modes of the first, the second and the third driving mode. Therefore, based on an operating aspect, a user is able to switch driving modes in which the chain saw 100 outputs different output powers to each other, and thereby the operation is effectively accomplished.

### (Third embodiment)

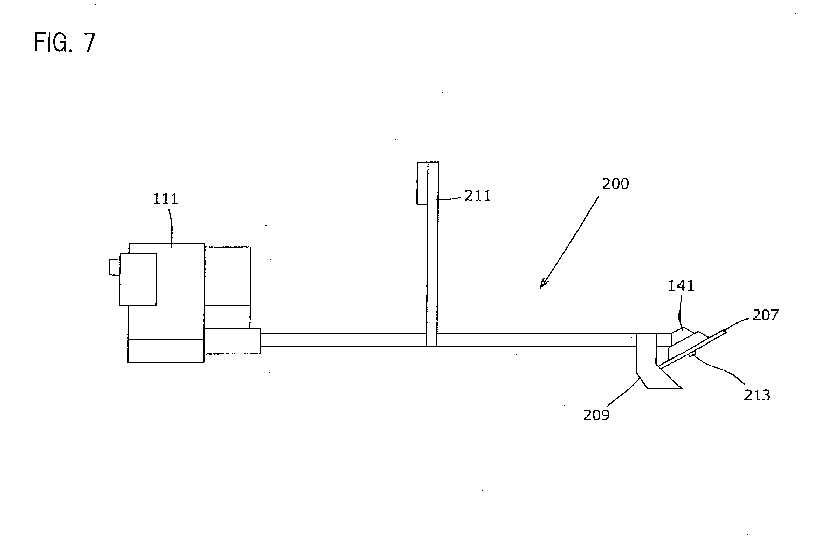

A third embodiment is explained with reference to Fig. 7. The third embodiment is one example applied to a brush cutter 200. Similar constructions to the first embodiment are numbered by the same reference numerals and detailed explanation is omitted. As shown in Fig. 7, an electric motor 141 is arranged between a blade attached shaft 213 to which the blade 207 is attached as a tool and an engine 111. The blade 207 is provided as a tool.

A rotor (not shown) of the electric motor 141 is connected to the blade attached shaft 213 which drives the blade 207 in a direct manner or via a reduction gear (in an indirect manner). The blade attached shaft 213 is provided as a driving shaft. The rotor of the electric motor 141 is connected to the end region of a driving shaft which extends within a control rod 201 via a centrifugal clutch. That is, a power output of the crank shaft of the engine 111 is transmitted to the rotor of the electric motor 141 via the driving shaft and the centrifugal clutch. Further, an electromagnetic clutch may be utilized instead of the centrifugal clutch.

According to the third embodiment described above, similar to the second embodiment, the brush cutter 200 is driven by one of the driving modes selected among three driving modes of the first, the second and the third driving mode. Therefore, based on an operating aspect, a user is able to switch driving modes in which the brush cutter 200 outputs different powers to each other, and thereby the operation is effectively accomplished.

Further, in the first and the third embodiment, similar to the second embodiment, the battery pack 137 may be attached to the battery attached portion via the battery adapter.

### (Fourth embodiment)

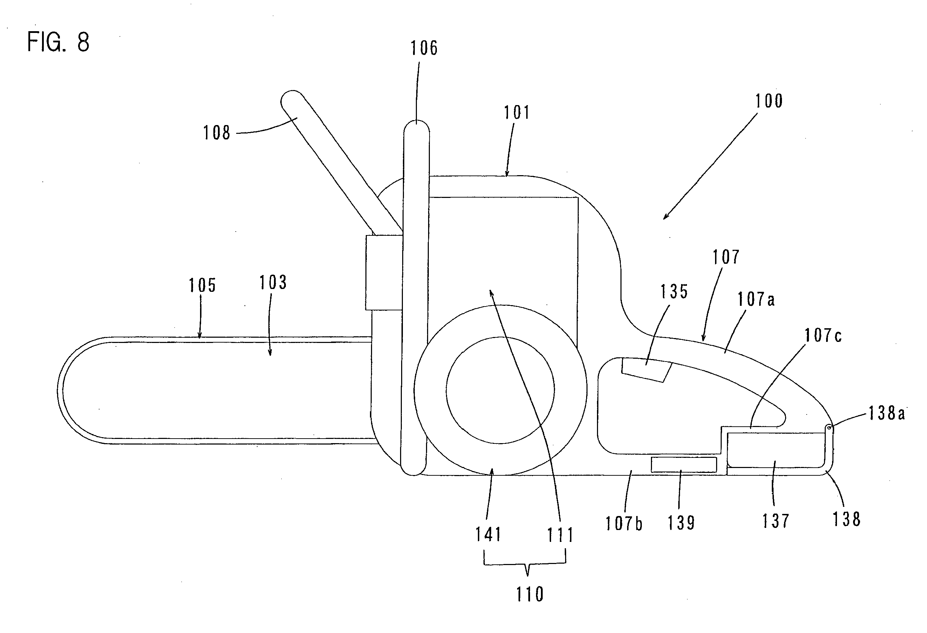

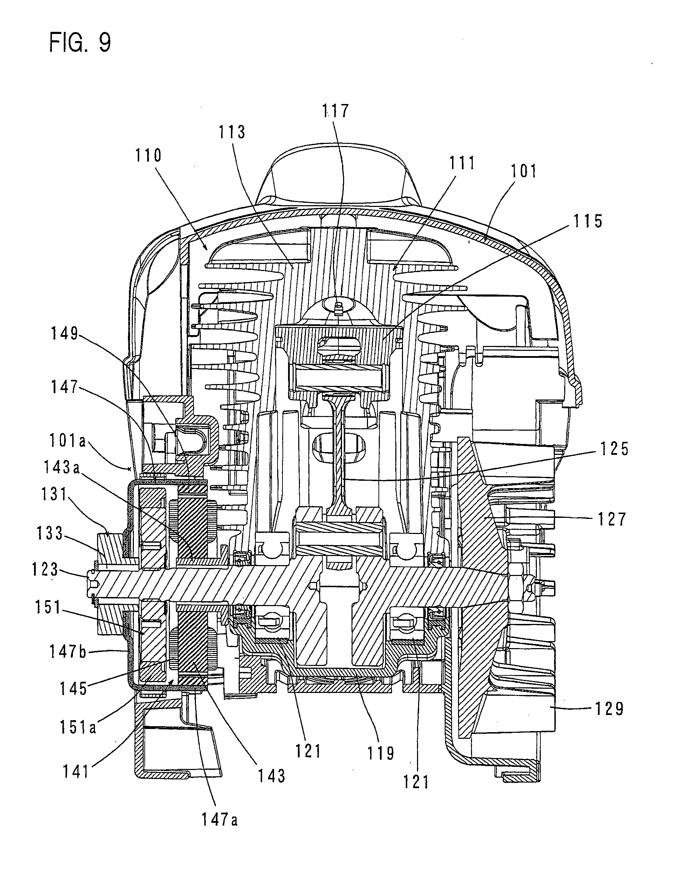

A fourth embodiment is explained with reference to Fig. 8 and Fig. 9. The fourth embodiment is one example applied to a chain saw 100 similar to the second embodiment. As shown in Fig. 8, the chain saw 100 is mainly provided with a main housing 101, a guide bar 103, a front handle 107 and a rear handle 107. The main housing 101 is one example of a feature corresponding to "a body portion" of the invention.

The front handle 106 and a hand guard 108 are connected to a front side region of the main housing 101. The rear handle 107 is connected to a rear side region of the main housing 101. Accordingly, a user operates the chain saw 100 while holding the front handle 106 and the rear handle 107, and thereby a cutting operation is performed.

The main housing 101 has a driving mechanism 110 for driving the chain saw 100. As shown in Fig. 9, the driving mechanism 110 includes an engine 111 and an electric motor 141. That is, the chain saw 100 is provided as a hybrid power tool which has two different driving sources of the engine 111 and the electric motor 141.

In the driving mechanism 110, a power output of the electric motor 141 is directly transmitted to a saw chain 105. On the other hand, a power output of the engine 111 is indirectly transmitted to the saw chain 105 via the electric motor 141. The engine 111 and the electric motor 141 are housed in the main housing 101. The main housing 101 is provided with two divided housings which are formed by an upper housing and a lower housing with respect to an axis of a crank shaft 123 of the engine 111. The engine 111 is one example of a feature corresponding to "an engine", and the electric motor 141 is one example of a feature corresponding to "a motor" of the invention.

The engine 111 is formed as a reciprocating engine, and is mainly provided with a cylinder 113, a piston 115, a spark plug 115, a crank case 119, a crank shaft 123 and a connecting rod 125.

The crank shaft 123 is arranged so as to extend in a horizontal direction (lateral direction) crossing a direction (front-rear direction) in which the guide bar 103 extends. One end side of the crank shaft 123 is extended outward through an opening 101a which is formed on a side wall of the main housing 101. A driving shaft 131 for driving the saw chain 105 is relatively attached in a relatively rotatable manner to a one end region of the crank shaft 123 via a needle bearing 133. Further, a fly wheel 127 with which a cooling fan 129 is formed integrally at an outer surface is fixedly attached on the other end region of the crank shaft 123.

A recoil starter and a coupling (not shown) are arranged outside the fly wheel 125 in an axial direction of the fly wheel 125. When the recoil starter is pulled (operated) manually by a user and the fly wheel 127 is rotated via the coupling, the engine 111 is started.

The electric motor 141 is arranged between the driving shaft 131 and the crank shaft 123 in a power transmission route in which a power output of the engine 111 is transmitted to the driving shaft 131. The electric motor 141 is formed as an outer rotor motor, and is mainly provided with a stator core 143, a stator coil 145, an outer rotor 147 and a magnet 149. The electric motor 141 is arranged coaxially with the crank shaft 123. The stator core 143 is a disk-shaped member made of a magnetic material. The stator core 143 is fixed on outer surfaces of the cylinder 113 and the crank case 119 via the sleeve 143a. The sleeve 143 is penetrated by the crank shaft 123. The sleeve 143a is penetrated by the crank shaft 123. The stator coil 145 is wound on the stator core 143, and when electric current is applied, the stator core 143 is excited.

The outer rotor 147 is a cup-shaped member which has a cylindrical side wall 147a and bottom wall 147b. The side wall 147a is arranged outside the stator core 143 so as to surround the stator core 143. The magnet 149 is arranged on an inner surface of the side wall 147a so as to face an outer surface of the stator core 143. The bottom wall 147b of the outer rotor 147 has a through hole on its center region. The crank shaft 123 is arranged so as to loosely penetrate the through hole. The driving shaft 131 is fixed on a center region of an outer surface of the bottom wall 147b of the outer rotor 147. That is, the outer rotor 147 of the electric motor 141 is directly connected to the driving shaft 131, and thereby a power output of the electric motor 141 is directly transmitted to the driving shaft 131.

A power output of the engine 111 is transmitted to the outer rotor 147 via a centrifugal clutch 151 which is arranged between the crank shaft 123 and the outer rotor 147. The centrifugal clutch 151 is connected to the crank shaft 123 at an adjacent region to the stator core 143. In the centrifugal clutch 151, a clutch shoe 151a moves outward by a centrifugal force generated when the centrifugal clutch 151 is rotated integrally with the crank shaft 123, and then the clutch shoe 151a contacts with the inner surface of the outer rotor 147. Accordingly, rotation of the crank shaft 123 is transmitted to the outer rotor 147. That is, when a speed of rotation of the crank shaft 123 is not faster than a predetermined speed, the centrifugal clutch 151 doesn' t transmit rotation of the crank shaft 123 to the outer rotor 147. On the other hand, when the speed of rotation of the crank shaft 123 is faster than the predetermined speed, the centrifugal clutch 151 transmits rotation of the crank shaft 123 to the outer rotor 147.

As shown in Fig. 8, the rear handle 107 is provided as a handle which connects to a rear lower region of the main housing 101 and extends rearward. The rear handle 107 is formed as substantially triangular-looped shape in a side view. That is, the rear handle 107 includes an upper side portion 107a which is connected to a rear center region of the main housing 101 and which is curved and extended rearward and downward, and a lower side part 107b which is connected to the rear lower region of the main housing 101 and which is straightly extended rearward. Further, a rear end of the upper side portion 107a and a rear end of the lower side portion 107b are connected to each other.

A driving mode switching switch (not shown) for switching driving modes, which is manually operable by a user, is arranged on the rear handle 107. The driving mode switching switch is adapted to switch the driving modes among a first driving mode in which the engine 111 and the electric motor 141 are driven, a second driving mode in which only the electric motor 141 is driven, and a third driving mode in which only the engine 111 is driven.

The upper side portion 107a is provided as a grip which is held by a user. A throttle lever 135 which is provided as an engine power operating member being manually operated by a user, and a stop switch (not shown) which is adapted to stop the engine 111 are arranged on the upper side portion 107a. The throttle lever 135 is provided as an operated member which adjusts an amount of inlet air (air or mixture gas of fuel and air) flowed into the engine 111 and further adjusts a rotation speed (number of rotations) of the engine 111. Further, the throttle lever 135 is adapted to adjust a rotation speed (number of rotations) of the electric motor 141. The upper side portion 107a is one example of a feature corresponding to "a holding region" of the invention.

The lower side portion 107b has a lower surface which produces a substantially flush surface with a lower surface of the main housing 101. Accordingly, when the chain saw 100 is put on the ground and so on, the weight of the chain saw 100 is transmitted to the ground via the flush surface. Therefore, the chain saw 100 is put stably on the ground. Further, the lower side portion 107b is connected to the rear region of the upper side portion 107a. Accordingly, the lower side portion 107b supports the rear region of the upper side portion 107. As a result, the the upper side portion 107a which is served as a handle is stably held by a user.

A battery pack 137 which provides electric current to the electric motor 141 is arranged at a connection region of the upper side portion 107a and the lower side portion 107b. That is, the battery pack 137 is arranged at the rear end region of the rear handle 107 which is the most distant region from the engine 111. The battery pack 137 houses a plurality of battery cells within its singular battery case. The rear handle 107 is one example of a feature corresponding to "a connecting portion", and the connection region of the upper side portion 107a and the rear side portion 107b is one example of features corresponding to "a distal end region" of the invention. Further, the upper side portion 107a of the rear handle 107 is one example of a feature corresponding to "a first portion", and the lower side portion 107b of the rear handle 107 is one example of a feature corresponding to "a second portion" of the invention.

A battery attached portion 107c to which the battery pack 137 is attached is provided at the connection region of the upper side portion 107a and the lower side portion 107b. In the battery attached portion 107c, for example, a pair of guide rails is provided. The battery pack 137 is slid against the guide rails in a rear handle extending direction (front-rear direction) or a vertical direction which crosses the rear handle extending direction, and thereby the battery pack 137 is detachably attached to the battery attached portion 107c. The battery attached portion 107c is one example of a feature corresponding to "a battery attached portion" of the invention.

The battery pack 137 attached to the battery attached portion 107c is covered by a battery cover 138. The battery cover 138 is opened and closed by rotating around a support shaft 138a in the vertical direction. The battery cover 138 is served as a protector which protects the battery pack 137 by covering a lower surface of the battery pack 137. Accordingly, when the chain saw 100 is put on the ground, the battery pack 137 is protected.

A controller 139 is arranged on the lower side portion 107b of the rear handle 107, the controller 139 controlling a driving of the electric motor 141 and the engine 111 based on an operation of the throttle lever 135. When the first driving mode is selected and the engine 111 is started, the controller 139 drives and controls both the engine 111 and the electric motor 141 based on the operation of the throttle lever 135. Further, when the second driving mode is selected, the controller 139 drives and controls the electric motor 141 based on the operation of the throttle lever 135. Further, when the third driving mode is selected and the engine 111 is started, the controller 139 drives and controls the engine 111 based on the operation of the throttle lever 135.

As to the chain saw 100 described above, when the first driving mode is selected via the driving mode switching switch and the engine 111 is started by the recoil starter, both the engine 111 and the electric motor 141 are driven by operating the throttle lever 135. When a rotation speed of the crank shaft 123 exceeds a predetermined threshold, rotation of the crank shaft 123 is transmitted to the outer rotor 147 via the centrifugal clutch 151. That is, in case that the engine 111 and the electric motor 141 are driven, the driving shaft 131 is driven by both power output of the engine 111 and the electric motor 141. As a result, the saw chain 105 is driven.

When the second driving mode is selected, only the electric motor 141 is driven by operating the throttle lever 135. Accordingly, the driving shaft 131 is driven by the outer rotor 147, and thereby the saw chain 105 is driven. In this case, because the centrifugal clutch 151 is not actuated, rotation of the outer rotor 147 is not prevented by the centrifugal clutch 151.

When the third driving mode is selected and the engine 111 is started, only the engine 111 is driven by operating the throttle lever 135. When a rotation speed of the crank shaft 123 exceeds a predetermined threshold, rotation of the crank shaft 123 is transmitted to the outer rotor 147 via the centrifugal clutch 151. Accordingly, the outer rotor 147 is rotated integrally with the crank shaft 123, and thereby the driving shaft is driven. As a result, the saw chain 105 is driven.

According to the fourth embodiment, the saw chain 150 is driven by one of the driving modes selected among three driving modes of the first driving mode in which the engine 111 and the electric motor 141 is driven, the second driving mode in which only the electric motor 141 is driven, and the third driving mode in which only the engine 111 is driven. Therefore, a user is able to switch and select the driving modes based on operating aspects in which load exerted on the saw chain 105 are different to each other. As a result, a cutting operation against a workpiece is effectively accomplished.

Further, according to the fourth embodiment, because the main housing 101 and the battery pack 137 are connected by the rear handle 107, the battery pack 137 is located distantly from the engine 111 which is housed by the main housing 101. Therefore, transmission of vibration and/or heat generated by a driving of the engine 111 to the battery pack 137 is prevented. Accordingly, the battery pack 137 is protected from vibration and/or heat of the engine 111. Further, similar to the battery pack 137, the controller 139 which controls the electric motor 141 is also protected from the vibration and/or heat of the engine 111.

Further, according to the fourth embodiment, the battery pack 137 is arranged at the rear and lower region of the rear handle 107, which is the most distant from the main housing 101. Therefore, in order to protect the battery pack 137 from vibration and/or heat of the engine 111, the battery pack 137 is rationally arranged.

Further, according to the fourth embodiment, the battery pack 137 is slid against the battery attached portion 107c and thereby the battery pack 137 is attached to the battery attached portion 107c. Accordingly, for example, in a construction in which the battery pack 137 is attached by sliding against the rear handle 107 from the rear toward the front of the rear handle 107, an attached space for the battery pack 137 is defined at the rear and lower area of the rear handle 107. Therefore, the rear handle 107 including the battery attached portion 107c is reasonably compactified. Further, for example, in a construction in which the battery pack 137 is attached by sliding against the rear handle 107 from the upper side toward the down side of the rear handle 107, a lower part of the battery pack 137 is supported by the battery attached portion 107c. Accordingly, because an attaching direction of the battery pack 137 mates the gravity direction, dropping off of the battery pack 137 from the battery attached portion 107c is prevented.

Further, according to the fourth embodiment, the battery pack 137 is changeable. Therefore, the chain saw 100 is able to perform an operation for a long period of time. Further, according to the fourth embodiment, the battery pack 137 is effectively protected by the battery cover 138.

### (Fifth embodiment)

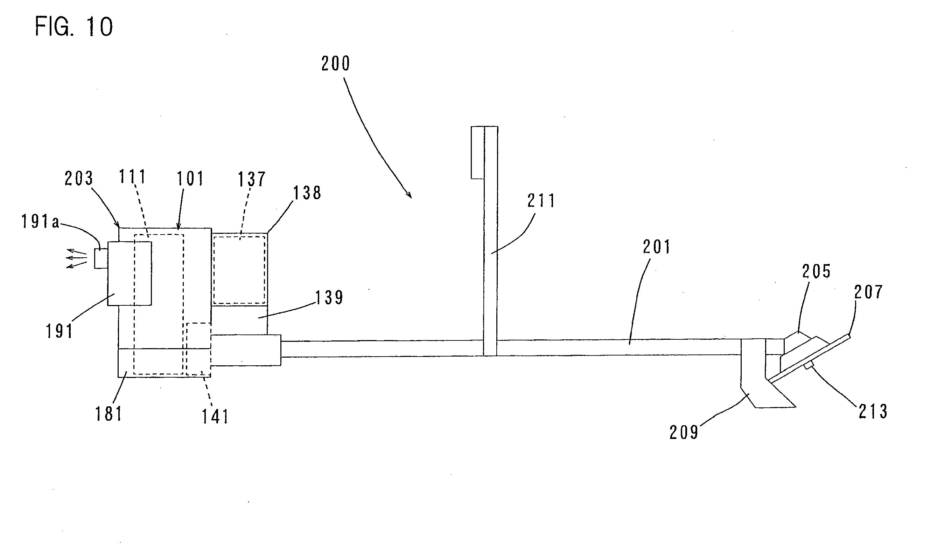

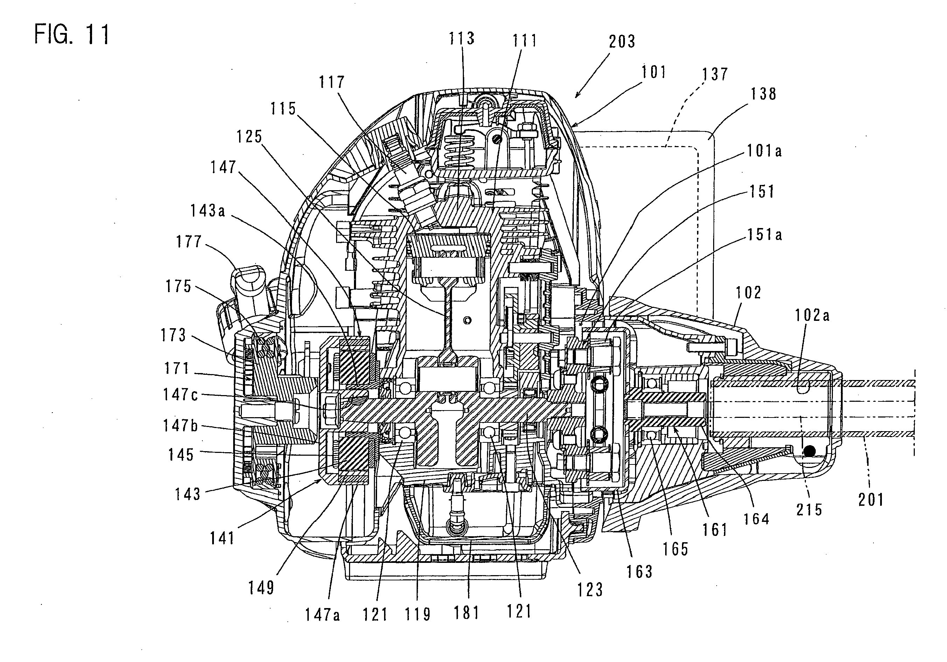

A fifth embodiment is explained with reference to Fig. 10 and Fig. 11. The fifth embodiment is one example applied to a brush cutter 200 as a power tool. Similar constructions to the first to the fourth embodiment are numbered by the same reference numerals and detailed explanation is omitted. As shown in Fig. 10, the brush cutter 200 is mainly provided with a control rod 201, a driving unit 203, a gear head 205, a blade 207, a safety cover 209 and a handle 211. The driving unit 203 is provided as a hybrid drive mechanism which includes two different driving sources of an engine 111 and an electric motor 141. The engine 111 and the electric motor 141 are housed in the main housing 101. The main housing 101 is one example of a feature corresponding to "a body portion" of the invention.

A driving mode switching switch (not shown) as an operated member for switching driving modes is arranged on the handle 211, which is manually operable by a user. The driving mode switching switch is adapted to switch the driving modes among a first driving mode in which the engine 111 and the electric motor 141 are driven and a second driving mode in which only the engine 111 is driven. Further, a throttle lever is arranged on the handle 211. The throttle lever is provided similar to the first embodiment.

As shown in Fig. 10, in the fifth embodiment, a muffler 191 which exhausts an exhaust air from the engine 111 to the atmosphere is arranged at a rear and upper region of the main housing 101. An exhausting direction of the exhaust air exhausted from an exhaust opening 191a of the muffler 191 is defined rearward, specifically, the exhausting direction being defined as a direction opposite to a protruding direction in which the driving shaft 215 protrudes from the main housing 101. In other words, the exhausting direction is one direction of the front-rear direction, which heads toward a rear area behind the brush cutter 200 from the exhaust opening 191a. Accordingly, a plane formed by an opening edge of the exhaust opening 191a through which the exhaust air is exhausted crosses the front-rear direction. In other words, a normal line direction of the plane formed by the opening edge of the exhaust opening 191a mates the front-rear direction. The exhaust opening 191a of the muffler 191 is one example of a feature corresponding to "an exhaust opening" of the invention.

Further, as shown in Fig. 10, a battery pack 137 which provides electric current to the electric motor 141 is detachably attached to the main housing 101. The battery pack 137 is arranged at a front and upper region of the main housing 101. In other words, the battery pack 137 is arranged at a region which is located an opposite direction side of the muffler 191, the opposite direction being opposite to the exhausting direction. Further, as shown in Fig. 11, when seen in a direction (vertical direction) in which a piston 115 moves, the battery pack 137 is arranged so as to overlap with a rear end region of the driving shaft 215. The battery pack 137 is one example of a feature corresponding to "a battery" of the invention.

The front and upper region of the main housing 101 is defined as a battery arranged region. At the battery arranged region, for example, a pair of guide rails as a battery holding portion is provided. The battery pack 137 is slid against the guide rails in the vertical direction or the front-rear direction (a longitudinal direction of the driving shaft 215), thereby the battery pack 137 is detachably attached to the battery holding portion. The battery pack 137 attached to the main housing 101 is covered by a battery cover 138. The battery cover 138 is served as a protector which protects the battery pack 137, and is detachably attached to the main housing 101. Further, the battery cover 138 may be attached to the main housing 101in a rotatable manner around a support shaft which is arranged on the main housing 101, and thereby the battery cover 138 may be opened and closed by rotation around the support shaft. The battery cover 138 is one example of a feature corresponding to "a battery cover" of the invention.

Further, a controller 139 which controls the engine 111 and the electric motor 141 is arranged in the main housing 101. The controller 139 is arranged at a front and lower region in the main housing 101. The controller 139 is one example of a feature corresponding to "a controller" of the invention.

When the first driving mode is selected and the engine 111 is started, the controller 139 controls an amount of inlet air flowed into the engine 111 and a timing of firing based on an operated movement of the throttle lever, and thereby the controller 139 controls a rotation speed of the engine 111. And further, the controller 139 controls an electric current provision to the electric motor 141 based on the operation of the throttle lever, and thereby the controller 139 controls the rotation speed of the electric motor 141. On the other hand, when the second driving mode is selected and the engine 111 is started, the controller 139 controls the amount of inlet air flowed into the engine 111 and a timing of firing based on the operation of the throttle lever, and thereby the controller 139 controls the rotation speed of the engine 111.

As to the brush cutter 200 described above, when the first driving mode is selected via the driving mode switching switch and the engine 111 is started, the controller 139 drives and controls the engine 111 and the electric motor 141 based on an operation of the throttle lever. Accordingly, the electric motor 141 assists a driving of the engine 111. When a rotation speed of a crank shaft 123 exceeds a predetermined threshold, rotation of the crank shaft 123 is transmitted to an intermediate shaft 161 via a centrifugal clutch 151. As a result, rotation of the crank shaft 123 is transmitted to the blade 207 via the driving shaft 214 and a blade attached shaft 213 of the gear head 205. That is, in a state that the engine 111 and the electric motor 141 are driven, the blade 207 is driven by both power output of the engine 111 and the electric motor 141.

On the other hand, when the second driving mode is selected and the engine 111 is started, the controller 139 controls the electric motor 141 so as not to be driven. That is, in the second driving mode, the electric motor 141 is not driven even if the throttle lever is operated. Accordingly, a rotation speed of the crank shaft 123 exceeds the predetermined threshold, rotation of the crank shaft 123 is transmitted to the driving shaft 215 via the centrifugal clutch 151, and thereby the blade 207 is driven.

As described above, according to the fifth embodiment, because the driving shaft 215 is drivable by both the engine 111 and the electric motor 141, the brush cutter 200 is driven by a relatively large power output without utilizing a large displacement engine.

Further, according to the fifth embodiment, the blade 207 is driven by one of the selected driving modes among the first and the second driving mode. Therefore, a user is able to switch and select the driving modes based on operating aspects in which load exerted on the blade 207 are different to each other, and thereby the operation is effectively accomplished.

Further, according to the fifth embodiment, the muffler 191 for exhausting the exhaust air from the engine 111 to the atmosphere is arranged at the rear and upper region of the main housing 101, and the exhausting direction of the exhaust air from the muffler 191 is defined backward. Further, with respect to the exhausting direction, the battery pack 137 is arranged other than on a normal line of an opening plane defined by the opening edge of the exhaust opening 191a of the muffler 191. Specifically, the battery pack 137 is arranged at the front and upper region of the main housing 101. Accordingly, the exhaust air from the exhaust opening 191a is prevented from hitting the battery pack 137 directly. As a result, the battery pack 137 is protected from heat of the exhaust air of the engine 111.

Further, according to the fifth embodiment, the battery pack 137 is arranged closer to the driving shaft 215 than the muffler 191 in the front-rear direction of the brush cutter 200. Further, when seen in the moving direction of the piston 115 of the engine 111, the battery pack 137 is arranged so as to overlap with the driving shaft 215. Therefore, the battery pack 137 is reasonably arranged. Further, because the battery pack 137 is distantly arranged from the muffler 191, a heat transmission from the muffler 191 to the battery pack 137 is prevented.

Further, according to the fifth embodiment, the battery pack 137 is attached to the front and upper region of the main housing 101. Accordingly, because the battery pack 137 is arranged opposite to the muffler 191 with respect to the main housing 101 in the front-rear direction, the battery pack 137 is able to be attached without interference of the muffler 191. Further, because a lower part of the attached battery pack 137 is supported by the main housing 101 and the housing cover 102, dropping off of the battery pack 137 is prevented.

Further, according to the fifth embodiment, because the battery pack 137 is changeable, the brush cutter 200 is able to perform an operation for a long period of time by using a plurality of the battery packs 137. Further, because the battery pack 137 is covered by the battery cover 138, the battery pack 137 attached to the main housing 101 is effectively protected.

Further, according to the fifth embodiment, the controller 139 for controlling the electric motor 141 is arranged at the front and lower region of the main housing 101. Accordingly, similar to the battery pack 137, the exhaust air from the exhaust opening 191a of the muffler 191 is prevented from hitting the controller 139 directly. As a result, the controller 139 is protected from heat of the exhaust air of the engine 111. Further, because the controller 139 is arranged under the battery pack 137, similar to the battery pack 137, when seen in the moving direction of the piston 115 of the engine 111, the controller 139 is also arranged so as to overlap with the driving shaft 215. Accordingly, not only battery pack 137 but also controller 139 is reasonably arranged.

In each embodiments, the power tool may have at least the first driving mode. Further, the outer rotor motor is utilized as the electric motor 141, however an inner rotor motor may be utilized instead.

Further, in each embodiments, the brush cutter 200 or the chain saw 100 is used to explain as examples of the power tool, however it is not limited to such power tool. For example, a petrol string trimmer, a power cutter, a sprayer, a vacuum cleaner and so on as a power tool is applied to the invention.

Having regard to an aspect of the invention, following features are provided. Further, an object of features 1 to 8 is, in consideration of a battery attached aspect, to improve usability of a power tool.

### (Feature 1)

A power tool which drives a tool and performs an operation, comprising:
an engine,
a motor,
a driving shaft capable of driving the tool, and
a battery attached portion to which a battery is attached which provides current to the motor,
wherein the power tool drives the tool in a hybrid driving mode in which both the engine and the motor drive the tool,
and wherein the motor is arranged between the engine and the driving shaft,
and wherein both the battery and a battery adapter are detachably attached to the battery attached portion, the battery being attachable directly to the battery attached portion and also attachable indirectly to the battery attached portion via the battery adapter.

### (Feature 2)

The power tool according to feature 1, wherein the battery attached portion is formed so that both the battery and the battery adapter are attached by a sliding motion in a predetermined direction.

### (Feature 3)

The power tool according to feature 2, wherein the battery attached portion is formed so that the battery adapter is attached, the battery adapter includes a first portion which is attached to the battery attached portion, a second portion to which the battery is attached, and a connecting cable which connects the first portion and the second portion,
and wherein in a state that the battery adapter is attached to the battery attached portion, the connecting cable extends from the first portion in a direction which is opposite to a sliding direction of the battery adapter against the battery attached portion.

### (Feature 4)

The power tool according to any one of features 1 to 3, wherein the battery attached portion is formed so that a plurality of batteries are attached via the battery adapter.

### (Feature 5)

The power tool according to any one of features 1 to 4, wherein the motor has a stator and a rotor, and the motor is formed as an outer rotor motor in which the rotor is arranged rotatably outside the stator,
and wherein the rotor is connected to the driving shaft.

### (Feature 6)

A power tool which drives a tool and performs an operation, comprising:
an engine,
a motor,
a driving shaft capable of driving the tool, and
a battery attached portion to which a battery is attached which provides current to the motor,
wherein the power tool drives the tool in a hybrid driving mode in which both the engine and the motor drive the tool,
and wherein the engine is arranged between the motor and the driving shaft.

### (Feature 7)

The power tool according to feature 6, wherein the battery attached portion is formed so that both a battery and a battery adapter are detachably attached, the battery being attachable directly to the battery attached portion and also attachable indirectly to the battery attached portion via the battery adapter.

### (Feature 8)

The power tool according to any one of features 1 to 7, wherein the motor is arrange coaxially with an output shaft of the engine.

### (Feature 9)

A power tool which drives a tool and performs an operation, comprising:
an engine capable of driving the tool,
a motor,
a body portion which houses the engine,
a battery which provides current to the motor, and
a connecting portion which connects the body portion and the battery,
wherein the connecting portion has a holding region which is held by a user.

### (Feature 10)

The power tool according to feature 9, wherein the connecting portion includes a first portion which connects the body portion and the battery, and a second portion which is other than the first portion, the second portion connecting the body portion and the battery,
and wherein the holding region is provided on at least one of the first portion and the second portion.

### (Feature 11)

The power tool according to feature 9 or 10, wherein the battery is connected to a distal end region of the connecting portion, the distal end region being the most distant from the body portion.

### (Feature 12)

The power tool according to any one of features 9 to 11, wherein the connecting portion includes a battery attached portion to which the battery is attached,
and wherein the battery is detachably attached to the battery attached portion.

### (Feature 13)

The power tool according to any one of features 9 to 12, comprising a battery cover which covers the battery.

### (Feature 14)

The power tool according to any one of features 9 to 13, comprising a controller which controls the motor,
wherein the controller is arranged at the connecting portion.

### (Feature 15)

The power tool according to any one of features 9 to 14, wherein the motor drives the tool in conjunction with the engine.

### (Feature 16)

The power tool according to feature 9, comprising a controller which controls the motor,
wherein the connecting portion includes a first portion which connects the body portion and the battery, and a second portion which is other than the first portion, the second portion connecting the body portion and the battery,
and wherein the holding region is provided on the first portion and the controller is arranged at the second portion.

### (Feature 17)

A power tool which drives a tool and performs an operation, comprising:
an engine,
a motor,
a driving shaft capable of driving the tool,
a body portion which houses the engine, and
a battery which provides current to the motor,
wherein the engine drives the driving shaft,
and wherein the body portion has an exhaust opening through which exhaust air of the engine is exhausted,
and wherein the battery is arranged at the body portion other than on a normal line of a plane defined by an opening edge of the exhaust opening, the normal line extending from the plane outward opposite to the engine.

### (Feature 18)

The power tool according to feature 17, wherein an exhausting direction in which the exhaust air is exhausted is opposite to a direction in which the driving shaft protrudes from the body portion,
and wherein the battery is arranged at the body portion so that the battery is closer to the driving shaft than the exhaust opening.

### (Feature 19)

The power tool according to feature 17 or 18, wherein the battery is arranged at a region which overlaps with the driving shaft, when seen in a direction in which a piston slides within a cylinder of the engine.

### (Feature 20)

The power tool according to any one of features 17 to 19, wherein the battery is detachably attached to the body portion.

### (Feature 21)

The power tool according to any one of features 17 to 20, comprising a controller which controls the motor,
wherein the controller is arranged at the battery side of the body portion, which is across the engine from the exhaust opening.

### (Feature 22)

The power tool according to any one of features 17 to 21, comprising a battery cover which covers the battery.

### (Feature 23)

The power tool according to one of features 17 to 22, wherein the motor drives the tool in conjunction with the engine.

### (Feature 24)

A power tool which drives a tool and performs an operation, comprising:
an engine,
a motor,
a driving shaft capable of driving the tool,
a body portion which houses the engine, and
a battery which provides current to the motor,
wherein the engine drives the driving shaft,
and wherein the body portion has an exhaust opening through which exhaust air of the engine is exhausted,
and wherein the battery is arranged at an opposite region of the body portion with respect to the exhaust opening, the opposite region being opposite to an exhausting direction side with respect to the exhaust opening, the exhausting direction being defined in which the exhaust air is exhausted.

### (Feature 25)

A power tool which drives a tool and performs an operation, comprising:
an engine,
a motor,
a driving shaft capable of driving the tool,
a body portion which houses the engine, and
a battery which provides current to the motor,
wherein the engine drives the driving shaft,
and wherein the battery is arranged at a region of the body portion other than on a normal line of a plane defined by an opening edge of the exhaust opening with respect to an exhausting direction of the exhaust air.

A correspondence relation between each components of the embodiments and features of the invention is explained as follows. Further, each embodiment is one example to utilize the invention and the invention is not limited to the embodiments.
The saw chain 105 corresponds to "a tool" of the invention.
The blade 207 corresponds to "a tool" of the invention.
The engine 111 corresponds to "an engine" of the invention.
The piston 115 corresponds to "a piston" of the invention.
The crank shaft 123 corresponds to "an output shaft" of the invention.
The driving shaft 131, 215 correspond to "a driving shaft" of the invention.
The blade attached shaft 213 corresponds to "a driving shaft" of the invention.
The electric motor 141 corresponds to "a motor" of the invention.
The stator core 143 corresponds to "a stator" of the invention.
The outer rotor 147 corresponds to "a rotor" of the invention.
The battery pack 137 corresponds to "a battery" of the invention.
The recoil starter 171 corresponds to "a recoil starter" of the invention.
The first driving mode corresponds to "a hybrid driving mode" of the invention.
The rear handle 107 corresponds to "a connecting portion" of the invention.
The connecting region of the upper side portion 107a and the lower side portion 107b of the rear handle 107 corresponds to "a distal end region" of the invention.
The upper side portion 107a of the rear handle 107 corresponds to "a first portion" of the invention.
The lower side portion 107b of the rear handle 107 corresponds to "a second portion" of the invention.
The battery attached portion 107c corresponds to "a battery attached portion" of the invention.
The controller 139 corresponds to "a controller" of the invention.
The exhaust opening 191a corresponds to "an exhaust opening" of the invention.
The battery cover 138 corresponds to "a battery cover" of the invention.

### Description of Numerals:

- 10: battery adapter
- 11: body side adapter
- 12: battery holding portion
- 13: cable
- 14: hook
- 20: battery adapter
- 22: battery holding portion
- 24: shoulder strap
- 100: chain saw
- 101: main housing
- 101a: opening
- 102: housing cover
- 102a: opening
- 103: guide bar
- 105: saw chain
- 106: front handle
- 107: rear handle
- 107a: upper side portion
- 107b: lower side portion
- 107c: battery attached portion
- 108: hand guard
- 110: driving mechanism
- 111: engine
- 113: cylinder
- 115: piston
- 117: spark plug
- 119: crank case
- 121: bearing
- 123: crank shaft
- 125: connecting rod
- 127: fly wheel
- 129: cooling fan
- 131: driving shaft
- 133: needle bearing
- 135: throttle lever
- 137: battery pack
- 138: battery cover
- 138a: support shaft
- 139: controller
- 141: electric motor
- 143: stator core
- 143a: sleeve
- 145: stator coil
- 147: outer rotor
- 147a: side wall
- 147b: bottom wall
- 147c: cylindrical part
- 149: magnet
- 151: centrifugal clutch
- 151a: clutch shoe
- 161: intermediate shaft
- 163: clutch drum
- 164: shaft
- 165: bearing
- 171: recoil starter
- 173: pulley
- 175: rope
- 177: lever
- 181: fuel tank
- 191: muffler
- 191a: exhaust opening
- 200: brush cutter
- 201: control rod
- 203: driving unit
- 205: gear head
- 207: blade
- 209: safety cover
- 211: handle
- 213: blade attached shaft
- 215: driving shaft

## Claims

1. A power tool which drives a tool and perfumes an operation, comprising:
an engine,
a motor,
a driving shaft capable of driving the tool, and
a battery which provides current to the motor,
wherein the power tool drives the tool in a hybrid driving mode in which both the engine and the motor drive the tool,
and wherein the engine is arranged between the motor and the driving shaft.

2. The power tool according to claim 1, wherein the motor biases a piston of the engine when the piston moves toward a top dead point from a bottom dead point during one engine cycle.

3. The power tool according to claim 2, wherein the motor functions as a generator when the piston moves toward the bottom dead point from the top dead point during one engine cycle.

4. The power tool according to claim 1, wherein the motor functions as a generator, and wherein the battery is charged by electricity generated by the motor driven as the generator.

5. The power tool according to any one of claims 1 to 4, wherein the motor functions as a starter motor when starting the engine.

6. The power tool according to any one of claims 1 to 5, further comprising a recoil starter which is connected to the motor,
wherein the recoil starter starts the engine via the motor.

7. The power tool according to any one of claims 1 to 6, wherein the motor is connected to an output shaft of the engine.

8. The power tool according to claim 7, wherein the motor has a stator and a rotor, and the motor is formed as an outer rotor motor in which the rotor is arranged rotatably outside the stator,
and wherein the rotor is connected to the output shaft of the engine.

9. The power tool according to any one of claims 1 to 8, comprising a body portion which houses the engine, and a connecting portion which connects the body portion and the battery,
wherein the connecting portion has a holding region which is held by a user.

10. The power tool according to claim 9, wherein the connecting portion includes a first portion which connects the body portion and the battery, and a second portion which is other than the first portion, the second portion connecting the body portion and the battery,
and wherein the holding region is provided on at least one of the first portion and the second portion.

11. The power tool according to claim 9 or 10, wherein the battery is connected to a distal end region of the connecting portion, the distal end region being the most distant from the body portion.

12. The power tool according to any one of claims 9 to 11, wherein the connecting portion includes a battery attached portion to which the battery is attached,
and wherein the battery is detachably attached to the battery attached portion.

13. The power tool according to any one of claims 9 to 12, comprising a controller which controls the motor,
wherein the controller is arranged at the connecting portion.

14. The power tool according to any one of claims 1 to 8, comprising a body portion which houses the engine
wherein the body portion has an exhaust opening through which an exhaust air of the engine is exhausted,
and wherein the battery is arranged at the body portion other than on a normal line of a plane defined by an opening edge of the exhaust opening, the normal line extending from the plane outward opposite to the engine.

15. The power tool according to claim 14, wherein an exhausting direction in which the exhaust air is exhausted is opposite to a direction in which the driving shaft protrudes from the body portion,
and wherein the battery is arranged at the body portion so that the battery is closer to the driving shaft than the exhaust opening.

16. The power tool according to claim 14 or 15, wherein the battery is arranged at a region which overlaps with the driving shaft, when seen in a direction in which a piston slides within a cylinder of the engine.

17. The power tool according to any one of claims 14 to 16, wherein the battery is detachably attached to the body portion.

18. The power tool according to any one of claims 14 to 17, comprising a controller which controls the motor,
wherein the controller is arranged at the battery side of the body portion, which is across the engine from the exhaust opening.

19. The power tool according to any one of claims 1 to 18, comprising a battery cover which covers the battery.
